# EUROPEAN PATENT APPLICATION

(11) **EP 4 782 995 A1**
(43) Date of publication of application: **29.07.2026**
(21) Application number: 24867426.9
(22) Date of filing: 18.09.2024
(51) Int. Cl.: G06F 9/451

(54) **MULTIMEDIA CONTENT DISPLAY METHOD AND APPARATUS, ELECTRONIC DEVICE, MEDIUM AND PRODUCT**

(30) Priority: 18.09.2023 CN 202311204644
(71) Applicant: Beijing Zitiao Network Technology Co., Ltd., Beijing 100190 (CN)
(72) Inventor: LI, Zihao, Beijing 100028 (CN); YANG, Nan, Beijing 100028 (CN); HU, Mengwan, Beijing 100028 (CN)
(74) Representative: Marks & Clerk LLP
(86) International application number: PCT/CN2024/119342
(87) International publication number: WO 2025/061018

(57) **Abstract**

A multimedia content display method and apparatus, an electronic device, a medium, and a product. The method comprises: receiving a display request for multimedia content (S101); and, according to the display request for the multimedia content, displaying the multimedia content on a display page for the multimedia content, and displaying on the display page a recommended search word and associated information thereof, wherein the associated information is used for representing a reason for displaying the recommended search word (S102).

## Description

The present application claims priority to Chinese Patent Application No. 202311204644.8, filed on September 18, 2023, which is incorporated herein by reference in its entirety as a part of the present application.

### TECHNICAL FIELD

Embodiments of the present disclosure relate to a multimedia content display method and apparatus, an electronic device, a medium, and a product.

### BACKGROUND

In a feed display interface, information content, such as video content, can be displayed. When a user performs a switch operation, such as a pull-down or swipe-up operation, in the feed display interface, the displayed information content can be switched.

A search control that triggers an active search can be provided in the feed display interface. A search interface can be displayed when the user performs a trigger operation on the search control. A search information input box for inputting search information can be displayed in the search interface. The user can actively search for information by inputting search information in the search information input box.

### SUMMARY

Embodiments of the present disclosure provide a multimedia content display method, apparatus, electronic device, medium, and product.

In a first aspect, an embodiment of the present disclosure provides a multimedia content display method. The method includes: receiving a display request for multimedia content; and displaying the multimedia content on a display page of the multimedia content and presenting a recommended search term and associated information of the recommended search term in the display page, in response to the display request for the multimedia content, where the associated information indicates a reason for presenting the recommended search term.

In a second aspect, an embodiment of the present disclosure provides a multimedia content display apparatus. The apparatus includes: a receiving unit configured to receive a display request for multimedia content; and a display unit configured to display the multimedia content on a display page of the multimedia content and present a recommended search term and associated information of the recommended search term in the display page, in response to the display request for the multimedia content, where the associated information indicates a reason for presenting the recommended search term.

In a third aspect, an embodiment of the present disclosure provides an electronic device. The electronic device includes: a processor and a memory, where
the memory has computer-executable instructions stored therein; and
the processor executes the computer-executable instructions stored in the memory, to cause the processor to perform the multimedia content display method according to the first aspect and various possible designs of the first aspect.

In a fourth aspect, an embodiment of the present disclosure provides a computer-readable storage medium, where the computer-readable storage medium has computer-executable instructions stored therein, and the computer-executable instructions, when executed by a processor, cause the multimedia content display method according to the first aspect and various possible designs of the first aspect to be implemented.

In a fifth aspect, an embodiment of the present disclosure provides a computer program product including a computer program, where the computer program, when executed by a processor, causes the multimedia content display method according to the first aspect and various possible designs of the first aspect to be implemented.

### BRIEF DESCRIPTION OF DRAWINGS

In order to describe the technical solutions in embodiments of the present disclosure or in the related art more clearly, the accompanying drawings for describing the embodiments or the related art are briefly described below. Apparently, the accompanying drawings in the following description are some embodiments of the present disclosure, and those of ordinary skill in the art may still derive other accompanying drawings from these accompanying drawings without creative efforts.
FIG. 1 is a schematic flowchart of a multimedia content display method according to an embodiment of the present disclosure;
FIG. 2 is a schematic diagram of an application scenario according to an embodiment of the present disclosure;
FIG. 3 is another schematic flowchart of a multimedia content display method according to an embodiment of the present disclosure;
FIG. 4 is a schematic diagram of another application scenario according to an embodiment of the present disclosure;
FIG. 5 is a schematic diagram of still another application scenario according to an embodiment of the present disclosure;
FIG. 6 is a schematic structural diagram of a multimedia content display apparatus according to an embodiment of the present disclosure; and
FIG. 7 is a schematic diagram of a hardware structure of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

It can be understood that before the use of the technical solutions disclosed in the embodiments of the present disclosure, a user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure. Illustratively, the personal information of the user may be comment information of the user on a multimedia content.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure. A client for displaying a media content can be installed in a user's terminal device. When running, the client can display one or more multimedia contents in a media feed.

The user can browse a multimedia content using an application client or a web client running on the terminal device. The multimedia content here may include one or more of the following: text, pictures, audio, and videos.

When browsing the multimedia content, the user has a need to view more relevant information content.

In some implementations, some pieces of multimedia content may be associated with a recommended search term. When the client presents these pieces of multimedia content, the recommended search term can be presented. When the user intends to browse information relevant to these pieces of multimedia content, the user can initiate a search by clicking on the recommended search term. That is, the user initiates a search by performing a trigger operation such as clicking or touching on the recommended search term recommended to the user. This can be referred to as a passive search. Thus, during the passive search, the user no longer needs to perform a trigger operation on the search function control in the display interface of the multimedia content to open a search interface and then input a search term in the opened search interface for a search while browsing the multimedia content. This can improve the search efficiency of the user to some extent.

However, although the recommended search term is displayed in the display interface of the multimedia content, the recommended search term is only displayed in the display interface, which is not conducive to the user's understanding of the recommended search term, affecting the information obtaining efficiency of the user.

Embodiments of the present disclosure provide a multimedia content display method, apparatus, electronic device, medium, and product. The method includes receiving a display request for multimedia content; and displaying the multimedia content on a display page of the multimedia content and presenting a recommended search term and associated information of the recommended search term in the display page, in response to the display request for the multimedia content, where the associated information indicates a reason for presenting the recommended search term. The associated information indicates the reason for presenting the recommended search term, and therefore, the associated information can function as an explanation of a search keyword. The user can simultaneously browse the recommended search term and the associated information in a search box, and the reason for displaying the association of the recommended search term is known through the associated information. It is easy for the user to understand the recommended search term, which can improve the information obtaining efficiency of the user.

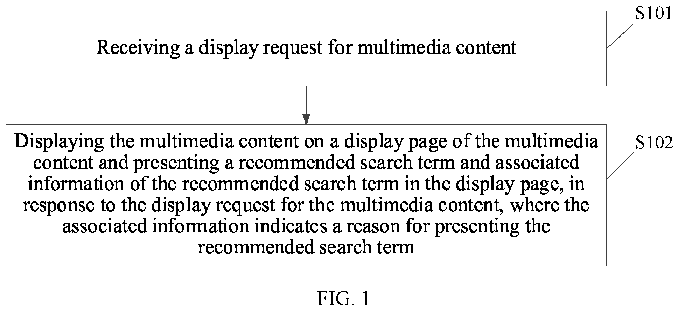

Referring to FIG. 1, a schematic flowchart of a multimedia content display method according to an embodiment of the present disclosure is shown.

As shown in FIG. 1, the method includes the following steps.

S101: Receiving a display request for multimedia content.

An execution entity of this embodiment may be a client running in a terminal device or a server providing services to the client.

The execution entity may receive the display request for the multimedia content, and the display request may be initiated by a user or by the server.

Illustratively, the user may perform a trigger operation based on an identifier or cover information of the displayed multimedia content, to initiate the display request for the multimedia content.

In some application scenarios, the multimedia content may be any piece of multimedia content in a feed.

S102: Displaying the multimedia content on a display page of the multimedia content and presenting a recommended search term and associated information of the recommended search term in the display page, in response to the display request for the multimedia content, where the associated information indicates a reason for presenting the recommended search term.

After the display request is received, the multimedia content may be displayed in the display page of the multimedia content.

In some application scenarios, at least one keyword may be extracted from subjects of a plurality of pieces of multimedia content and/or description information added by posters to the multimedia content, and these keywords may be used as recommended search terms.

In these application scenarios, for example, one or more pieces of multimedia content with the number of comments greater than a preset number-of-comments threshold, a click-through rate greater than a preset click-through rate threshold, the number of likes greater than a preset number-of-likes threshold, and/or the number of views greater than a preset number-of-views threshold may be selected from among the plurality of pieces of multimedia content. The multimedia content here may be multimedia content other than the multimedia content displayed based on the display request.

Content subjects or poster-added description information or both of the multimedia content are then obtained. At least one keyword is extracted from the content subjects and/or poster-added description information as the recommended search term. Specifically, at least one keyword may be extracted from the content subjects and/or poster-added description information as the recommended search term using a step of extracting a keyword from text in the related art.

In some embodiments, a target comment with the number of replies greater than a preset number-of-replies threshold and/or the number of likes greater than a preset number-of-likes threshold may be extracted from respective comments of the plurality of pieces of multimedia content. Keyword extraction is then performed on the target comment, thereby extracting at least one keyword of the comment content. The at least one keyword of the comment content may be used as the recommended search term. Associated content may be a comment from which the keyword is extracted.

Furthermore, in the above-described embodiments, a term having a preset association relationship with the keyword may be used as the recommended search term. Illustratively, the preset association relationship may be, for example, of the same meaning, of the same category, of the same type, or the like.

In some embodiments, the number of comments including content of a target keyword A exceeds a preset number-of-comments threshold, or the number of comments including content of a target keyword A exceeds the number of comments including another keyword, a recommended search term is determined based on the target keyword, and the recommended search term is presented. In these embodiments, the target keyword A may be the recommended search term, or a word having an association relationship with the target keyword may be the recommended search term. The association relationship is, for example, of the same type, of the same category, or the like.

The associated information may be any information describing why the recommended search term appears in the display page of the multimedia content. The associated information may include any information such as text, pictures, or characters for indicating a reason why the recommended search term appears in the display page.

In some embodiments, the reason for presenting the recommended search term indicated by the associated information includes one of the following:
the recommended search term being mentioned in associated content of the multimedia content; or
the recommended search term having a preset association relationship with the multimedia content.

In some application scenarios, the reason is that the recommended search term is mentioned in the associated content of the multimedia content. Illustratively, the associated content may include the recommended search term, or the recommended search term may be extracted from the associated content. The associated information may be any information indicating that the recommended search term is derived from the associated content.

In some embodiments, the associated content includes one of the following: comment content of the multimedia content, a subject of the multimedia content, description content of the multimedia content, a picture of the multimedia content, and audio of the multimedia content.

In one example, the associated content is comment content of the multimedia content. The associated information may, for example, include: "from the comment section", "mentioned in a comment", "mentioned in the comment section", or the like.

In some application scenarios, the associated content may be a subject of the multimedia content, and the associated information may include, for example: "a subject from the multimedia".

In some application scenarios, the recommended search term has a preset association relationship with the multimedia content. For example, multimedia content A is content of a plant B1, the recommended search term may be a plant B2, and the plant B1 and the plant B2 have a preset association relationship, such as belonging to the same type of plants. The associated information may be any information indicating the association relationship.

In some application scenarios, the associated content is a multimedia picture, the multimedia picture may be one or more pictures in the multimedia content, such as one or more frames of pictures in video content. For example, the multimedia picture includes one or more image pictures in image-text multimedia content. In these application scenarios, semantic content reflected in the multimedia picture may be obtained, and the semantic content may be related to the recommended search term, or the recommended search term is extracted from the semantic content. The associated information may, for example, include: "mentioned in a multimedia picture" or "from a multimedia picture".

In some application scenarios, the associated content is a piece of multimedia audio. In these application scenarios, audio content may be determined based on the multimedia audio. The audio content is related to the recommended search term, for example, the audio content includes the recommended search term. The associated information may, for example, include: "mentioned in a piece of multimedia audio" or "from a piece of multimedia audio".

In these embodiments, the recommended search term is determined by associated content in different dimensions, and the associated information indicating that the recommended search term is derived from the associated content in different dimensions is presented to the user. The recommended search term is presented by matching with the multimedia content in different dimensions of the multimedia content, and therefore, a show rate of the recommended search term can be improved, and the efficiency of the user obtaining the associated content in different dimensions in which the recommended search term is mentioned can further be improved.

In some embodiments, the step S102 includes: presenting the recommended search term and the associated information in the display page of the multimedia content in response to the reason being that the recommended search term is mentioned in an associated content of the multimedia content. The associated information indicates that the recommended search term is mentioned in the associated content.

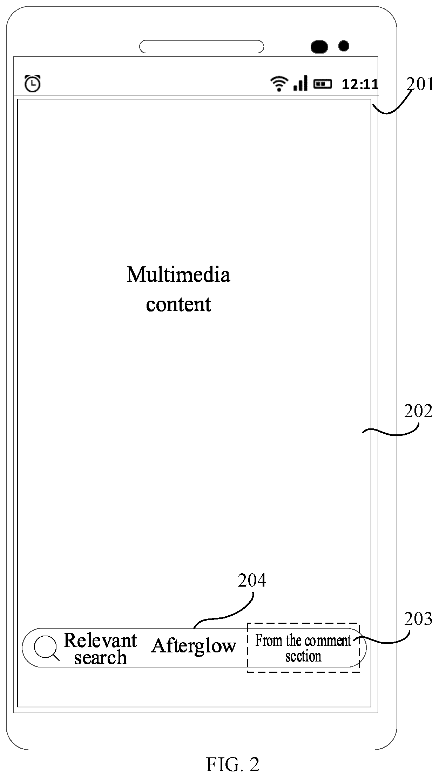

Referring to FIG. 2, FIG. 2 is a schematic diagram of an application scenario according to an embodiment of the present disclosure. As shown in FIG. 2, multimedia content 202 is displayed on a display page 201. A recommended search term "afterglow" is mentioned in comment content for the multimedia content 202. Therefore, the recommended search term "afterglow" and associated information 203, such as "from the comment section", for indicating that the recommended search term "afterglow" is mentioned in associated content may be displayed in the display page 201.

The comment content in the comment section includes the associated content associated with the recommended search term, for example, the recommended search term is mentioned in the comment. During displaying of the multimedia content, the recommended search term "afterglow" and the associated information 203 "mentioned in the comment section" or "from the comment section" indicating the associated content may be displayed.

In this embodiment, the display request for the multimedia content is received. The multimedia content is displayed on a display page of the multimedia content and a recommended search term and associated information of the recommended search term are presented in the display page, in response to the display request for the multimedia content, where the associated information indicates a reason for presenting the recommended search term. The associated information indicates the reason for presenting the recommended search term, which to a certain extent may serve as an explanation for why the recommended search term is displayed in the display page of the multimedia content, and therefore, the user may browse the recommended search term and the associated information in the display page of the multimedia content, so as to facilitate the user to understand the recommended search term, thereby improving the information obtaining efficiency.

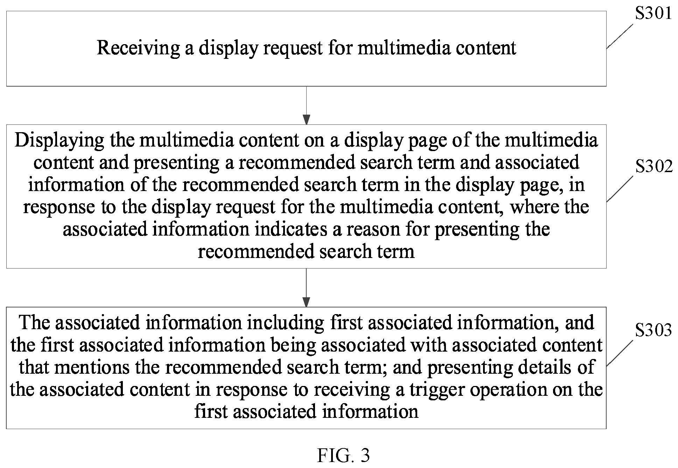

Referring to FIG. 3, another schematic flowchart of a multimedia content display method according to an embodiment of the present disclosure is shown. As shown in FIG. 3, the method includes the following steps.

S301: Receiving a display request for multimedia content.

S302: Displaying the multimedia content on a display page of the multimedia content and presenting a recommended search term and associated information of the recommended search term in the display page, in response to the display request for the multimedia content, where the associated information indicates a reason for presenting the recommended search term.

The specific implementation of the steps S301 and S302 is the same as or similar to the specific implementation of the steps S101 and S102 shown in FIG. 1, and will not be described in detail here.

S303: The associated information including first associated information, and the first associated information being associated with associated content that mentions the recommended search term; and presenting details of the associated content in response to receiving a trigger operation on the first associated information.

In this embodiment, an execution entity may be a client running in a terminal device or a server providing a service for a client.

When the multimedia content is displayed in the display page of a user client, the recommended search term and the first associated information are presented because the associated content of the multimedia content is related to the recommended search term (for example, the recommended search term is mentioned therein). The first associated information may be associated with the associated content. For example, the first associated information is associated with a URL address corresponding to the associated content.

The first associated information here is the associated information that is presented in the display page and presents details of the associated content by triggering the associated information. The first associated information indicates the reason for presenting the recommended search term. The first associated information may include a text, a picture, and/or a symbol, or the like.

The user may perform the trigger operation on the first associated information. After reception of the trigger operation of the user on the first associated information, the details of the associated content may be displayed.

In some embodiments, the associated content may be a subject of information content or description information of a poster for the information content, and displaying the details of the associated content may include: displaying the details including the subject or the information content described by the poster.

Illustratively, the multimedia content is video content. The first associated information may be, for example, "from a video subject", and when the user clicks on the first associated information, a video content interface including the video subject may be presented.

Illustratively, the multimedia content is video content. The first associated information may be, for example, "from a description". When the user clicks on the first associated information, content including the description of the poster for the video content may be presented.

In some application scenarios, the associated content is a user comment. The first associated information may refer to information indicating that the recommended search term is derived from a user comment, so as to explain the recommended search term, such as "mentioned in a comment".

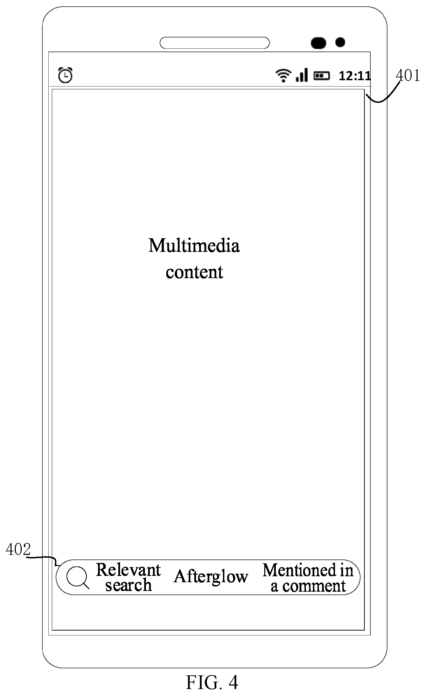

Referring to FIG. 4, a schematic diagram of another application scenario according to an embodiment of the present disclosure is shown. As shown in FIG. 4, multimedia content is displayed on a display page 401, and a recommended search term "afterglow" and first associated information "mentioned in a comment" are presented in the display page 401.

In the application scenario, a user who posted the comment may be a user different from a poster of the multimedia content. Comment data may be processed separately in the present disclosure. For example, a recommended search term is extracted from the comment data, an association is established between the recommended search term and the comment from which the recommended search term is derived, and so on.

In some application scenarios, a comment with the number of likes greater than a number-of-likes threshold, the number of reply comments greater than a number-of-reply-comments threshold, or a carried information volume greater than a preset information volume threshold may be used as a target comment from which the recommended search term is extracted. The recommended search term is then extracted from the target comment using a method of extracting a keyword from a text. Therefore, mining of a user-attentive or information-rich comment from the comments is achieved.

When the user performs the trigger operation on the first associated information, the details of the associated content may be displayed, for example, details of the target comment in the comment section may be displayed.

In some application scenarios, when the user performs the trigger operation on the first associated information, the comment section in which the target comment is located may be displayed in the form of a floating window or a pop-up window, and the target comment is displayed in the comment section. In addition, the target comment may further be displayed on the same display page that displays the multimedia content. For example, the display page is divided into an information content display region and a comment display region. The multimedia content is displayed in the information content display region, and at least one comment including the target comment is displayed in the comment display region.

The target comment may be a comment on the multimedia content currently presented, or a comment on another multimedia content.

In comparison with FIG. 1, this embodiment describes the content of displaying the details of the associated content by triggering the first associated information, thereby realizing displaying of the associated content in which the recommended search term is mentioned through the first associated information, and facilitating the efficiency of the user obtaining the associated content.

In some embodiments, the associated information includes second associated information. The multimedia content display method includes:
displaying search result details corresponding to the recommended search term in response to receiving a trigger operation on the recommended search term or the second associated information.

The second associated information here is associated information that is presented in the display page and presents the search result details by triggering the associated information. The second associated information indicates the reason for presenting the recommended search term. The second associated information may include a text, a picture, and/or a symbol, or the like.

In these embodiments, the recommended search term and the second associated information may be associated with a search result page. The search result details may be displayed when the user performs the trigger operation on the second associated information. The search result details may be displayed when the user performs the trigger operation on the recommended search term.

The search result corresponding to the recommended search term is usually the multimedia content that matches the recommended search term. Displaying the search result details may be displaying details of the multimedia content that matches the recommended search term. If the search result is a video, content of the video may be played after a trigger operation is performed on the second associated information.

In these embodiments, the search result details may be displayed by triggering the recommended search term or triggering the second associated information displayed near the recommended search term, so that the user can easily and quickly browse the search result details.

In some embodiments of the multimedia content display method shown in FIG. 1, the step S102 includes:
presenting the recommended search term and the associated information in a recommended search box of the display page.

The recommended search box may be a search box that achieves a passive search. The recommended search box may be provided with guide information, such as guide information "relevant search" presented in a recommended search box 204 in FIG. 2. In addition, the recommended search box further includes the recommended search term "afterglow" and the associated information indicating the reason for displaying the recommended search term.

The first associated information or the second associated information may be displayed in the recommended search box. The first associated information and the second associated information indicate the reason for displaying the recommended search term.

The first associated information may be associated with the associated content in which the recommended search term is mentioned. The user may perform the trigger operation on the first associated information, thereby displaying the associated content details.

The second associated information may be associated with the search result of the recommended search term. The search result details may be displayed when the user performs the trigger operation on the second associated information.

The first associated information may be displayed in the recommended search box in a region that is far from the recommended search term. The first associated information "mentioned in a comment" as shown in FIG. 4 is displayed on a right edge side of a recommended search box 402, far from the recommended search term "afterglow". The content displayed after the recommended search term is triggered may not be the same as the content displayed when the first associated information is triggered, and therefore, the first associated information is displayed far from the recommended search term, which can avoid the phenomenon of displaying content that is inconsistent with the user's needs due to a mistouch.

In some embodiments, a display region of a preset length may be set for the first associated information in the recommended search box. When an actual length of the first associated information is greater than the preset length, the first associated information may be truncated before displaying. Truncating the first associated information may include discarding the latter part of the content such that the reserved content meets the preset length. The truncating may also include discarding the front part of the content such that the reserved content meets the preset length. Alternatively, a part of the content may be extracted from the middle according to the preset length, to serve as the first associated information.

The second associated information is presented near the recommended search term.

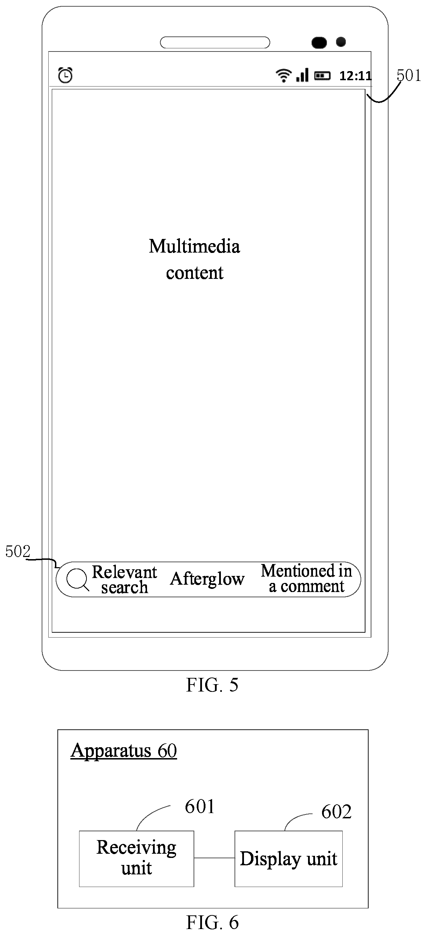

Referring to FIG. 5, a schematic diagram of still another application scenario according to an embodiment of the present disclosure is shown. As shown in FIG. 5, multimedia content is displayed on a display page 501. A recommended search box 502 may be presented in the display page 501. A recommended search term is related to a comment to the multimedia. The recommended search term "afterglow" and second associated information "mentioned in a comment section" may be presented in the recommended search box 502. The second associated information is set near the recommended search term. For example, the second associated information is displayed adjacent to the right of the recommended search term "afterglow."

In these embodiments, the second associated information is presented near the recommended search term, so that the user may be prompted with information about the associated content of the recommended search term, thereby assisting the user in understanding the recommended search term.

In some embodiments, the multimedia content display method further includes:
displaying a search result page corresponding to the recommended search term in response to receiving a trigger operation on the recommended search term or the second associated information.

In these embodiments, the recommended search term and the second associated information may be associated with a search result detail page. The search result details may be displayed when the user performs the trigger operation on the second associated information. The search result details may be displayed when the user performs the trigger operation on the recommended search term.

In these embodiments, the search result details may be displayed by triggering the recommended search term or triggering the second associated information displayed near the recommended search term, so that the user can easily and quickly browse the search result details.

In some embodiments, the second associated information is displayed in graphical form.

In these embodiments, the second associated information displayed in graphical form may be a label. The label denotes the reason for displaying the recommended search term.

The second associated information displayed in graphical form may be displayed in its entirety to fully present to the user the reason for displaying the recommended search term.

Corresponding to the multimedia content display method shown in FIG. 1, FIG. 6 is a structural block diagram of a multimedia content display apparatus according to an embodiment of the present disclosure. For ease of illustration, only parts related to this embodiment of the present disclosure are shown. Referring to FIG. 6, an apparatus 60 includes: a receiving unit 601 and a display unit 602, where
the receiving unit 601 is configured to receive a display request for multimedia content; and
the display unit 602 is configured to display the multimedia content on a display page of the multimedia content and present a recommended search term and associated information of the recommended search term in the display page, in response to the display request for the multimedia content, where the associated information indicates a reason for presenting the recommended search term.

In some embodiments, the reason for presenting the recommended search term indicated by the associated information includes one of the following:
the recommended search term being mentioned in associated content of the multimedia content; or
the recommended search term having a preset association relationship with the multimedia content.

In some embodiments, the display unit 602 is further configured to:
present the recommended search term and the associated information in the display page of the multimedia content in response to the reason being that the recommended search term is mentioned in associated content of the multimedia content. The associated information indicates that the recommended search term is mentioned in the associated content.

In some embodiments, the associated information includes first associated information, and the first associated information is associated with the associated content that mentions the recommended search term. The display unit 602 is further configured to:
present details of the associated content in response to receiving a trigger operation on the first associated information.

In some embodiments, the associated information includes second associated information. The display unit 602 is further configured to:
display search result details corresponding to the recommended search term in response to receiving a trigger operation on the recommended search term or the second associated information.

In some embodiments, the display unit 602 is further configured to:
present the recommended search term and the associated information in a recommended search box of the display page.

In some embodiments, the second associated information is displayed in graphical form.

In some embodiments, the associated content includes one of the following:
comment content of the multimedia content, a subject of the multimedia content, description content of the multimedia content, a picture of the multimedia content, or audio of the multimedia content.

In order to implement the above-described embodiments, an embodiment of the present disclosure further provides an electronic device.

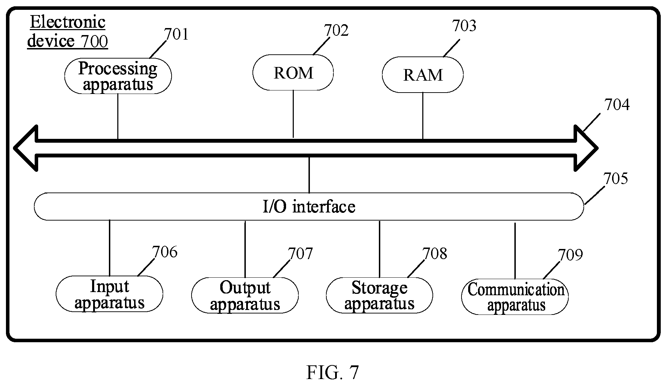

Referring to FIG. 7, a schematic structural diagram of an electronic device 700 suitable for implementing an embodiment of the present disclosure is shown. The electronic device 700 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in FIG. 7 is merely an example, and shall not impose any limitation on the function and scope of use of the embodiments of the present disclosure.

As shown in FIG. 7, the electronic device 700 may include a processing apparatus (for example, a central processing unit or a graphics processing unit) 701 that may perform a variety of appropriate actions and processing based on a program stored in a read-only memory (ROM) 702 or a program loaded from a storage apparatus 708 into a random access memory (RAM) 703. The RAM 703 further stores various programs and data required for the operation of the electronic device 700. The processing apparatus 701, the ROM 702, and the RAM 703 are connected to one another through a bus 704. An input/output (I/O) interface 705 is also connected to the bus 704.

Generally, the following apparatuses may be connected to the I/O interface 705: an input apparatus 706 including, for example, a touchscreen, a touchpad, a keyboard, a mouse, a camera, a microphone, an accelerometer, and a gyroscope; an output apparatus 707 including, for example, a liquid crystal display (LCD), a speaker, and a vibrator; the storage apparatus 708 including, for example, a magnetic tape and a hard disk drive; and a communication apparatus 709. The communication apparatus 709 may allow the electronic device 700 to perform wireless or wired communication with other devices to exchange data. Although FIG. 7 shows the electronic device 700 having various apparatuses, it should be understood that it is not required to implement or have all of the shown apparatuses. It may be an alternative to implement or have more or fewer apparatus.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 709, installed from the storage apparatus 708, or installed from the ROM 702. When the computer program is executed by the processing apparatus 701, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatus, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a receiving unit may alternatively be described as "a unit configured to receive a display request for a multimedia content".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

In a first aspect, according to one or more embodiments of the present disclosure, a multimedia content display method is provided. The method includes:
receiving a display request for multimedia content; and
displaying the multimedia content on a display page of the multimedia content and presenting a recommended search term and associated information of the recommended search term in the display page, in response to the display request for the multimedia content, where the associated information indicates a reason for presenting the recommended search term.

According to one or more embodiments of the present disclosure, the reason for presenting the recommended search term indicated by the associated information includes one of the following:
the recommended search term being mentioned in associated content of the multimedia content; or
the recommended search term having a preset association relationship with the multimedia content.

According to one or more embodiments of the present disclosure, displaying the multimedia content on the display page of the multimedia content and presenting the recommended search term and the associated information of the recommended search term in the display page, in response to the display request for the multimedia content includes:
presenting the recommended search term and the associated information in the display page of the multimedia content in response to the reason being that the recommended search term is mentioned in associated content of the multimedia content. The associated information indicates that the recommended search term is mentioned in the associated content.

According to one or more embodiments of the present disclosure, the associated information includes first associated information, and the first associated information is associated with the associated content that mentions the recommended search term. The method further includes:
presenting details of the associated content in response to receiving a trigger operation on the first associated information.

According to one or more embodiments of the present disclosure, the method further includes:
displaying search result details corresponding to the recommended search term in response to receiving a trigger operation on the recommended search term or the second associated information.

According to one or more embodiments of the present disclosure, presenting the recommended search term and the associated information of the recommended search term in the display page includes:
presenting the recommended search term and the associated information in a recommended search box of the display page.

According to one or more embodiments of the present disclosure, the second associated information is displayed in graphical form.

According to one or more embodiments of the present disclosure, the associated content includes one of the following:
comment content of the multimedia content, a subject of the multimedia content, description content of the multimedia content, a picture of the multimedia content, and audio of the multimedia content.

In a second aspect, according to one or more embodiments of the present disclosure, a multimedia content display apparatus is provided. The apparatus includes:
a receiving unit configured to receive a display request for multimedia content; and
a display unit configured to display the multimedia content on a display page of the multimedia content and present a recommended search term and associated information of the recommended search term in the display page, in response to the display request for the multimedia content, where the associated information indicates a reason for presenting the recommended search term.

According to one or more embodiments of the present disclosure, the reason for presenting the recommended search term indicated by the associated information includes one of the following:
the recommended search term being mentioned in associated content of the multimedia content; or
the recommended search term having a preset association relationship with the multimedia content.

According to one or more embodiments of the present disclosure, the display unit is further configured to:
present the recommended search term and the associated information in the display page of the multimedia content in response to the reason being that the recommended search term is mentioned in associated content of the multimedia content. The associated information indicates that the recommended search term is mentioned in the associated content.

According to one or more embodiments of the present disclosure, the associated information includes first associated information, and the first associated information is associated with the associated content that mentions the recommended search term. The display unit is further configured to:
present details of the associated content in response to receiving a trigger operation on the first associated information.

According to one or more embodiments of the present disclosure, the associated information includes second associated information. The display unit is further configured to:
display search result details corresponding to the recommended search term in response to receiving a trigger operation on the recommended search term or the second associated information.

According to one or more embodiments of the present disclosure, the display unit is further configured to:
present the recommended search term and the associated information in a recommended search box of the display page.

According to one or more embodiments of the present disclosure, the second associated information is displayed in graphical form.

According to one or more embodiments of the present disclosure, the associated content includes one of the following:
comment content of the multimedia content, a subject of the multimedia content, description content of the multimedia content, a picture of the multimedia content, or audio of the multimedia content. In a third aspect, according to one or more embodiments of the present disclosure, an electronic device is provided. The electronic device includes: at least one processor and a memory, where
the memory has computer-executable instructions stored therein; and
the at least one processor executes the computer-executable instructions stored in the memory, to cause the at least one processor to perform the multimedia content display method according to the first aspect and various possible designs of the first aspect.

In a fourth aspect, according to one or more embodiments of the present disclosure, a computer-readable storage medium is provided. The computer-readable storage medium has computer-executable instructions stored therein, and the computer-executable instructions, when executed by a processor, cause the multimedia content display method according to the first aspect and various possible designs of the first aspect to be implemented.

In a fifth aspect, according to one or more embodiments of the present disclosure, a computer program product including a computer program is provided, where the computer program, when executed by a processor, causes the multimedia content display method according to the first aspect and various possible designs of the first aspect to be implemented.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A multimedia content display method, comprising:
receiving a display request for multimedia content; and
displaying the multimedia content on a display page of the multimedia content and presenting a recommended search term and associated information of the recommended search term in the display page, in response to the display request for the multimedia content, wherein the associated information indicates a reason for presenting the recommended search term.

2. The method according to claim 1, wherein the reason for presenting the recommended search term indicated by the associated information comprises one of the following:
the recommended search term being mentioned in associated content of the multimedia content; or
the recommended search term having a preset association relationship with the multimedia content.

3. The method according to claim 1 or 2, wherein displaying the multimedia content on the display page of the multimedia content and presenting the recommended search term and the associated information of the recommended search term in the display page, in response to the display request for the multimedia content, comprises:
presenting the recommended search term and the associated information in the display page of the multimedia content in response to the reason being that the recommended search term is mentioned in associated content of the multimedia content, wherein the associated information indicates that the recommended search term is mentioned in the associated content.

4. The method according to claim 3, wherein the associated information comprises first associated information, and the first associated information is associated with the associated content that mentions the recommended search term; and the method further comprises:
presenting details of the associated content in response to receiving a trigger operation on the first associated information.

5. The method according to any one of claims 1 to 4, wherein the associated information comprises second associated information, and the method further comprises:
displaying search result details corresponding to the recommended search term in response to receiving a trigger operation on the recommended search term or the second associated information.

6. The method according to any one of claims 1 to 5, wherein presenting the recommended search term and the associated information of the recommended search term in the display page comprises:
presenting the recommended search term and the associated information in a recommended search box of the display page.

7. The method according to claim 5, wherein the second associated information is displayed in graphical form.

8. The method according to any one of claims 2 to 4, wherein the associated content comprises one of the following:
comment content of the multimedia content, a subject of the multimedia content, description content of the multimedia content, a picture of the multimedia content, or audio of the multimedia content.

9. A multimedia content display apparatus, comprising:
a receiving unit configured to receive a display request for multimedia content; and
a display unit configured to display the multimedia content on a display page of the multimedia content and present a recommended search term and associated information of the recommended search term in the display page, in response to the display request for the multimedia content, wherein the associated information indicates a reason for presenting the recommended search term.

10. An electronic device, comprising: a processor and a memory, wherein
the memory has computer-executable instructions stored therein; and
the processor executes the computer-executable instructions stored in the memory, to cause the processor to perform the multimedia content display method according to any one of claims 1 to 8.

11. A computer-readable storage medium having computer-executable instructions stored therein, wherein the computer-executable instructions, when executed by a processor, cause the multimedia content display method according to any one of claims 1 to 8 to be implemented.

12. A computer program product, comprising a computer program, wherein the computer program, when executed by a processor, causes the multimedia content display method according to any one of claims 1 to 8 to be implemented.
